# EUROPEAN PATENT SPECIFICATION

(11) **EP 0 821 876 B1**
(45) Date of publication and mention of the grant of the patent: **23.04.2003**
(21) Application number: 97305762.3
(22) Date of filing: 31.07.1997
(51) Int. Cl.: A01N 43/36, A01N 25/04

(54) **Stable arylpyrrole particles, process for their preparation and suspension concentrate compositions comprising them**
Stabile Arylpyrrol-Teilchen, Verfahren zu ihrer Herstellung und diese enthaltende Suspensionskonzentrate
Particules stables d'arylpyrrole, leur procédé de préparation et suspensions concentrées les contenant

(30) Priority: 02.08.1996 US 691478
(43) Date of publication of application: 04.02.1998
(73) Proprietor: BASF AKTIENGESELLSCHAFT, 67056 Ludwigshafen (DE)
(72) Inventor: Schaaf, Mimi Yih-Pei Chou, Princeton, New Jersey 08540 (US); Brunt, Steven, Yardley, Pennsylvania 19067 (US); Xu, Jian James, Princeton, New Jersey 08540 (US); Goldsmith, Andrew Evelyn, Denmead, Waterlooville,Hampshire PO7 6NE (GB); Mowery, Patrick Charles, Morrisville, Pennsylvania 19067 (US); Walker, Anthony Francis, Fareham, Hampshire, PO16 7JZ (GB); Donoghue, Edward S, Titusville, New Jersey 08560-1322 (US); Rajan, Srinivasan, Newtown, Pennsylvania 18940 (US)
(74) Representative: Langfinger, Klaus Dieter, Dr.

(56) References cited:
- EP-A- 0 249 075
- EP-A- 0 249 770
- EP-A- 0 683 979
- J.T. PEARSON & G. VARNEY: "Crystal growth studies involving phase transitions in aqueous drug suspensions" JOURNAL OF PHARMACY AND PHARMACOLOGY, vol. 21(Suppl.), 1969, LONDON, GB, pages 60S-9S, XP002045746

## Description

### BACKGROUND OF THE INVENTION

Pests such as insects and acarids cause tremendous global economic losses by reducing crop yields and lowering crop quality. Arylpyrrole compounds are useful for the control of insect and acarid pests. However, it has been found that arylpyrrole particles present in suspension concentrate may not maintain a stable particle size. In particular, it has been found that certain arylpyrrole particles grow to an unacceptable size during storage.

Certain pesticidal arylpyrrole compounds and methods for their preparation and use are described in U.S. Patent Numbers 5,010,098 and 5,233,051; and Canadian Patent Application Number 2,076,937. Chlorfenapyr (4-bromo-2-(p-chlorophenyl)-1-(ethoxymethyl)-5-(trifluoromethyl)pyrrole-3-carbonitrile) was the first arylpyrrole pesticide to be commercialized. Chlorfenapyr and methods for its preparation and use are described in U.S. Patent Number 5,010,098.

Suspension concentrate compositions comprising arylpyrrole particles are disclosed in U.S. Patent Number 5,496,845. However, it has been found that the particle size stability of the arylpyrrole compounds in the reference compositions is variable. Commonly, arylpyrrole particles known in the art increase in size during storage, i.e., an initial number of relatively small particles becomes a smaller number of larger particles. It is desirable to have particles whose sizes are predictably stable over time, to avoid undesired variations in the characteristics of formulations containing these particles.

### SUMMARY OF THE INVENTION

The present invention provides stable arylpyrrole particles wherein more than about 20% of the arylpyrrole is in a stable crystalline form thereof.

The present invention further provides a process for the preparation of stable arylpyrrole particles which process comprises:
providing a first mixture comprising arylpyrrole particles, a dispersing agent and water, characterized in that the first mixture is held in a temperature range of about 25°C to 80°C to obtain an aged mixture and the aged mixture is milled to obtain stabilized arylpyrrole particles.

The present invention also provides stable arylpyrrole particles prepared by the process of this invention, and suspension concentrate compositions comprising arylpyrrole particles of this invention.

It is, therefore, an object of the present invention to provide a process for stabilizing arylpyrrole particles.

It is another object of this invention to provide stable arylpyrrole particles.

It is a further object of this invention to provide suspension concentrate compositions which comprise stable arylpyrrole particles.

These and other objects and advantages of the present invention will become more apparent from the detailed description thereof set forth below, and from the appended claims.

### BRIEF DESCRIPTION OF THE DRAWINGS

FIG. 1 is the characteristic infrared absorption spectrum of the chlorfenapyr polymorph designated as "Polymorph I".

FIG. 2 is the characteristic infrared absorption spectrum of the chlorfenapyr polymorph designated as "Polymorph II".

### DETAILED DESCRIPTION OF THE PREFERRED EMBODIMENTS

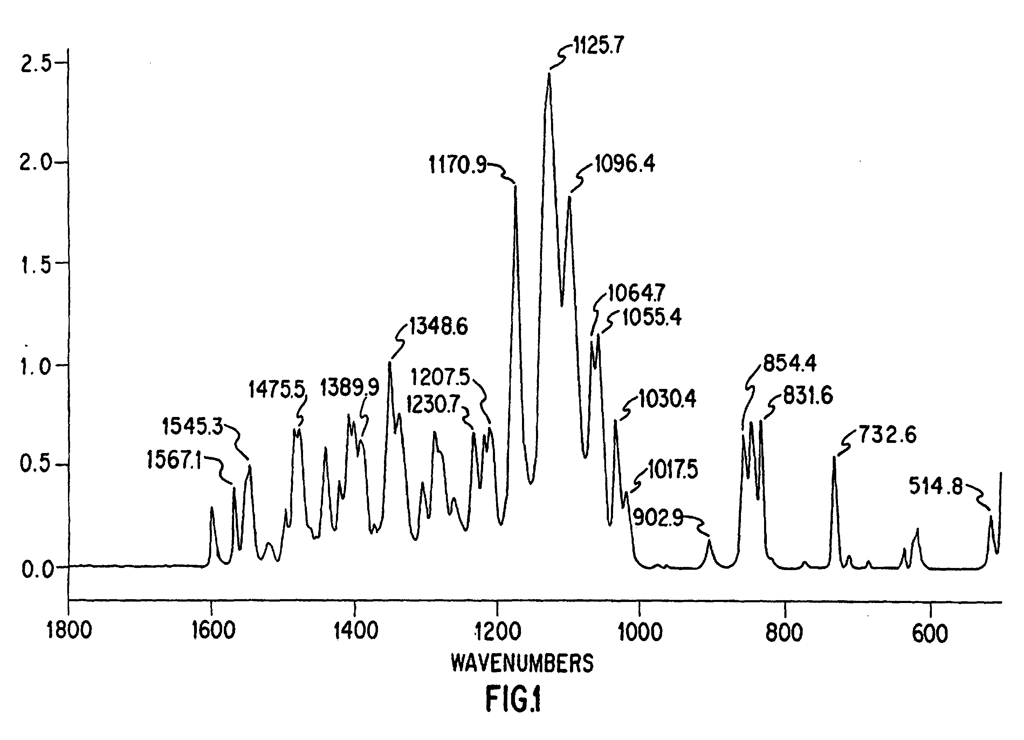

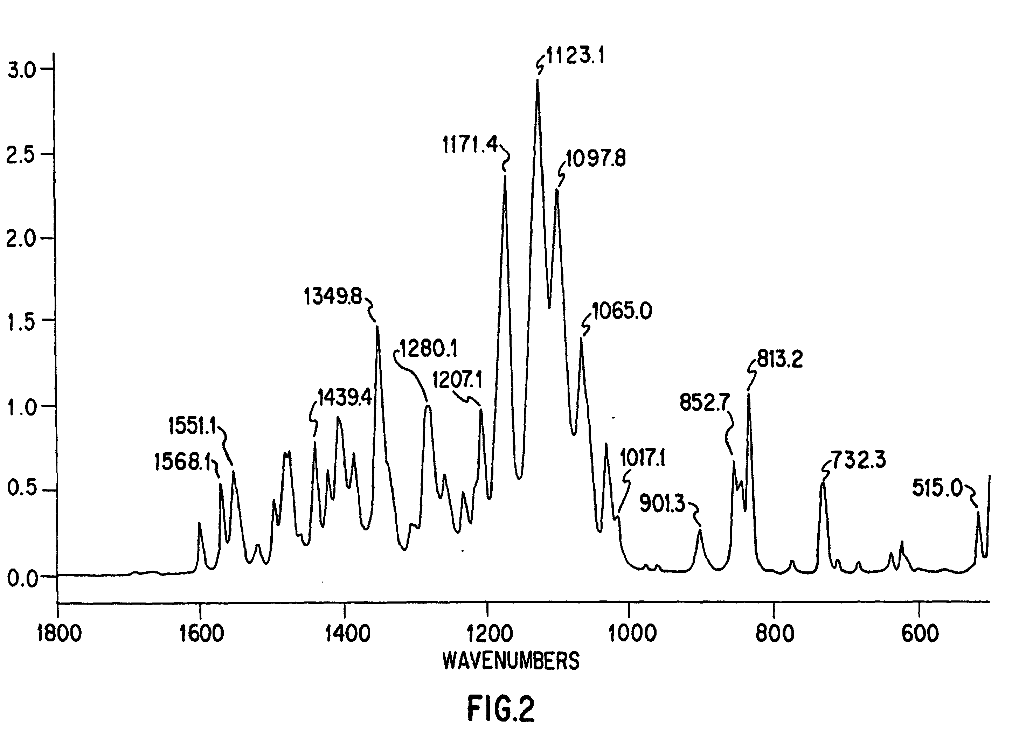

In one important aspect, the present invention provides stable arylpyrrole particles which grow insignificantly during storage in suspension concentrate compositions. We have discovered that arylpyrroles may exist in at least two crystal forms. The predominant crystal forms of chlorfenapyr, for example, are designated herein as Polymorph I and Polymorph II. Polymorph I has a melting point of 95 °C and the characteristic infrared absorption spectrum shown in FIG. 1. Polymorph II has a melting point of 101 °C and the characteristic infrared absorption spectrum shown in FIG. 2.

We have further discovered that certain arylpyrrole crystal forms are more stable than other arylpyrrole crystal forms. Surprisingly, compositions containing chlorfenapyr particles having a Polymorph I to Polymorph II ratio greater than about 1:4 are significantly more storage stable than compositions having a Polymorph I to Polymorph II ratio of 1:4 to 0:1.

Advantageously, the present invention relates to arylpyrrole particles comprising a stabilizing amount of a stable crystal form of the arylpyrrole. The stabilizing amount of the stable crystal form is that amount which prevents unacceptable particle growth during storage in compositions comprising the arylpyrrole particles and water. Unacceptable particle growth reduces the pesticidal efficacy of the arylpyrroles and/or detrimentally affects the physical properties of the compositions.

Heretofore, the stability of arylpyrrole particles was unpredictable because commercial production methods provide particles having widely varying amounts of the stable crystal form. The existence and importance of the different crystal forms were not known and understood, and there was no known method for achieving predictably stable particles.

It has now been discovered that different crystal forms, or polymorphs, can be identified. It has also been found that arylpyrrole suspension concentrate compositions comprising a high percentage of one polymorph are more stable than suspension concentrate compositions comprising a low percentage of that polymorph. In particular, chlorfenapyr suspension concentrate compositions comprising chlorfenapyr particles containing a high percentage of Polymorph I are more stable than suspension concentrate compositions containing a low percentage of Polymorph I. Because the amount of each crystal form can be measured, stable arylpyrrole suspension concentrates can now can be achieved consistently and predictably by forming the suspension from arylpyrrole particles having sufficient stable crystal content.

Arylpyrrole particles having the desired amount of stable crystal form may be selected from among the variety of particles formed by commercial production processes. Batches of an arylpyrrole that have different ratios of stable crystal form to unstable crystal form may be blended, using blending methods known in the art, to achieve a desired ratio. The ratio of the polymorphs present in a particular batch of chlorfenapyr particles may be determined by infrared analysis.

The chlorfenapyr particles of the present invention preferably comprise a Polymorph I to Polymorph II ratio of about 1:3 to 1:0 and more preferably about 1:1 to 1:0.

The volume mean diameter of the arylpyrrole particles of this invention is preferably less than about 100 µm, more preferably less than about 15 µm, and most preferably about 0.5 µm to 10 µm.

The arylpyrrole particles of this invention may be formulated as suspension concentrates, dispersible granules, wettable powders, dusts, dust concentrates, microemulsions and the like, by methods well-known in the art. These compositions include the arylpyrrole particles of this invention and one or more agronomically acceptable solid or liquid carriers.

In particular, the present invention provides stable suspension concentrate compositions which comprise about 10% to 50% by weight of the arylpyrrole particles of this invention, about 0.1% to 2% by weight of a dispersing agent, about 0.5% to 5% by weight of a steric stabilizer, about 0.1% to 1% by weight of a suspending agent, about 0.01% to 0.5% by weight of a thickening agent, up to about 15% by weight of an antifreeze agent, up to about 1% by weight of an antifoam agent, up to about 0.5% by weight of a preservative, and water.

The stable suspension concentrate compositions of this invention preferably comprise 10% to 40% by weight of the arylpyrrole particles, 0.5% to 1.5% by weight of a dispersing agent, 1.5% to 3.5% by weight of a steric stabilizer, 0.1% to 1% by weight of a suspending agent, 0.01% to 0.5% by weight of a thickening agent, 5% to 10% by weight of an antifreeze agent, 0.1% to 1% by weight of an antifoam agent, 0.01% to 0.5% by weight of a preservative, and water.

In the suspension concentrate compositions of the present invention, the ratio of the total amount of the dispersing agent and the steric stabilizer to the arylpyrrole particles is preferably about 1:5 to 1:15 and more preferably about 1:8 to 1:10.

The volume mean diameter of the arylpyrrole particles present in the suspension concentrate compositions of this invention is preferably less than 15 µm, more preferably about 0.5 µm to 10 µm, and most preferably about 0.5 µm to 4 µm.

Arylpyrrole compounds of this invention include those having the structural formula I 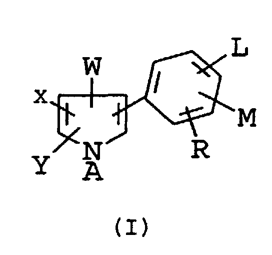 wherein
- X: is H, F, Cl, Br, I, C₁-C₄-haloalkyl or S(O)ₘ(C₁-C₄haloalkyl);
- Y: is F, Cl, Br, I, C₁-C₄haloalkyl or CN;
- W: is CN or NO₂;
- A: is C₁-C₄-alkyl unsubstituted or substituted with
one to three halogen atoms,
one cyano,
one hydroxy,
one C₁-C₄alkoxy,
one C₁-C₄alkylthio,
one phenyl unsubstituted or substituted with C₁-C₃alkyl, C₁-C₃alkoxy, or one to three halogen atoms,
one phenoxy unsubstituted or substituted with one to three halogen atoms, or
one benzyloxy unsubstituted or substituted with one halogen atom,
C₁-C₄carbalkoxymethyl,
C₃-C₄alkenyl unsubstituted or substituted with one to three halogen atoms,
cyano,
C₃-C₄alkynyl unsubstituted or substituted with one halogen atom,
di-(C₁-C₄alkyl)aminocarbonyl, or
benzoyl unsubstituted or substituted with one to three halogen atoms or
one to three C₁-C₄alkyl groups;
- L: is H, F, Cl or Br;
- M and R: are each independently H, C₁-C₃-alkyl, C₁-C₃alkoxy, C₁-C₃-alkylthio, C₁-C₃-alkylsulfinyl, C₁-C₃alkylsulfonyl, cyano, F, Cl, Br, I, nitro, C₁-C₃-haloalkyl, R₁CF₂Z, R₂CO or NR₃R₄, or when M and R are on adjacent positions and taken with the carbon atoms to which they are attached they may form a ring in which MR represents the structure:
-OCH₂O-, -OCF₂O-, -OCR₆R₇CR₈R₉O-,
-OCH₂CH₂-, -OCH₂CH₂CH₂- or -CH=CH-CH=CH-;
- Z: is S(O)n or O;
- R₁: is H, F, CHF₂, CHFCI or CF₃;
- R₂: is C₁-C₃alkyl, C₁-C₃alkoxy or NR₃R₄;
- R₃: is H or C₁-C₃alkyl;
- R₄: is H, C₁-C₃alkyl or R₅CO;
- R₅: is H or C₁-C₃alkyl;
- R₆, R₇, R₈ and R₉: are each independently hydrogen, halogen or C₁-C₃alkyl; and
- m and n: are each independently an integer of 0, 1 or 2.

Preferred arylpyrrole compounds suitable for use in the present invention are those having the structural formula II 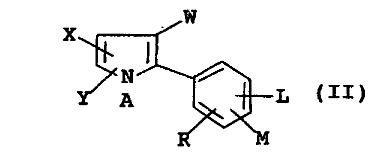 wherein X, Y, W, A, L, M and R are as described above.

More preferred arylpyrrole compounds which are particularly suitable for use in this invention are those having the structural formula II wherein
- X and Y: are each independently Cl, Br or CF₃;
- W: is CN;
- A: is C₁-C₄alkoxymethyl;
- L: is H or F;
- M: is H, F, Cl or Br; and
- R: is F, Cl, Br, CF₃ or OCF₃.

Another important aspect of this invention is a process for preparing stable arylpyrrole articles, which process comprises providing a first mixture comprising arylpyrrole particles, a dispersing agent and water, characterized in that the first mixture is held a temperature range of about 25 °C to 80 °C to obtain an aged mixture and the aged mixture is milled, wherein the arylpyrrole has the structural formula I as defined above.

The process of the present invention is hereinafter sometimes referred to as the "stabilization process". In this context, stabilization refers to maintaining a relatively constant particle size. Stable particles do not grow significantly during storage at room temperature for up to three months or longer in a suspension concentrate composition.

It has now been discovered that when the stable polymorph content of the arylpyrrole is less than approximately 80%, especially I less than about 50%, and most especially less than about 25% by weight, the stability of the arylpyrrole particles may be enhanced by the process of this invention. The amount of time needed to obtain a sufficiently aged mixture will vary, and will depend to some degree an the initial crystal form content, the particle size, and the temperature. The process of this invention is especially useful for stabilizing chlorfenapyr particles.

To overcome the problems associated with the use of arylpyrrole particles containing the less stable polymorph, it is desirable to subject all arylpyrrole particles to the stabilization process of this invention. The stabilization process of this invention is especially useful for improving the particle size stability of chlorfenapyr containing less than 80% of Polymorph I.

The volume mean diameter of the arylpyrrole particles utilized in the process of this invention is preferably less than about 100 µm and more preferably about 0.5 µm to 30 µm. The volume mean diameter of the stabilized arylpyrrole particles prepared by the stabilization process is preferably about 0.5 µm to 10 µm and more preferably about 0.5 µm to 4 µm.

Dispersing agents suitable for use in this invention include, but are not limited to, the salts of the condensation products of formaldehyde with the sulfonation products of polycyclic aromatic compounds; the salts of polyacrylic acids; the condensation products of fatty acids or aliphatic amines or amides containing at least about twelve carbon atoms in the molecule with ethylene oxide and/or propylene oxide; fatty acid esters of glycerol, sorbitan, sucrose or pentaerythritol and their condensation products with ethylene oxide and/or propylene oxide; condensation products of fatty alcohols or alkyl phenols with ethylene oxide and/or propylene oxide and their sulfates or sulfonates; and alkali or alkaline earth metal salts of sulfuric or sulfonic acid esters containing at least ten carbon atoms in the molecule, for example sodium lauryl sulfate and dodecylbenzene sulfonate.

Preferred dispersing agents include the salts of the condensation products of formaldehyde with the sulfonation products of polycyclic aromatic compounds such as the salts of the condensation products of formaldehyde with naphthalene sulfonates, petroleum sulfonates and lignin sulfonates. More preferred dispersing agents include the sodium sulfonate of naphthalene formaldehyde condensates such as MORWET® D425 (Witco, Houston, Texas), LOMAR® PW (Henkel, Cincinnati, Ohio) and DARVAN® 1 (R.T. Vanderbilt Co., Norwalk, Connecticut).

In a preferred process of the present invention, the first mixture is held in a temperature range of about 40 °C to 60 °C. In another preferred process of this invention, the first mixture is preferably held in the temperature range for about 1 hour to 72 hours, more preferably for about 2 hours to 48 hours and most preferably for about 2 hours to 24 hours.

The first mixture of the present invention preferably comprises about 10% to 85% by weight of arylpyrrole particles, about 0.1% to 3.5% by weight of a dispersing agent, about 0.5% to 8.5% by weight of a steric stabilizer, about 0.1% to 2% by weight of a suspending agent, up to about 25% by weight of an antifreeze agent, up to about 2% by weight of an antifoam agent, up to about 1% by weight of a preservative, up to about 1% by weight of a thickening agent, and water.

More preferably, the first mixture comprises 20% to 70% by weight of arylpyrrole particles having a volume mean diameter of less than about 100 µm, 0.5% to 2.5% by weight of a dispersing agent, 1.5% to 6% by weight of a steric stabilizer, 0.1% to 2% by weight of a suspending agent, 5% to 20% by weight of an antifreeze agent, 0.1% to 2% by weight of an antifoam agent, 0.01% to 1% by weight of a preservative and water.

The present invention also provides suspension concentrate compositions which comprise about 10% to 50% by weight of stabilized arylpyrrole particles prepared by the process of this invention, about 0.1% to 2% by weight of a dispersing agent, about 0.5% to 5% by weight of a steric stabilizer, about 0.1% to 1% by weight of a suspending agent, about 0.01% to 0.5% by weight of a thickening agent, about 5% to 15% by weight of an antifreeze agent, up to about 1% by weight of an antifoam agent, up to about 0.5% by weight of a preservative, and water.

The suspension concentrate compositions of this invention preferably comprise 10% to 40% by weight of stabilized arylpyrrole particles having a volume mean diameter of 0.5 µm to 10 µm, 0.5% to 1.5% by weight of a dispersing agent, 1.5% to 3.5% by weight of a steric stabilizer, 0.1% to 1% by weight of a suspending agent, 0.01% to 0.5% by weight of a thickening agent, 5% to 10% by weight of an antifreeze agent, 0.1% to 1% by weight of an antifoam agent, 0.01% to 0.5% by weight of a preservative, and water.

In the suspension concentrate compositions and the preferred first mixtures of the present invention, the ratio of the total amount of the dispersing agent and the steric stabilizer to the appropriate arylpyrrole particles is preferably about 1:5 to 1:15 and more preferably about 1:8 to 1:10.

Steric stabilizers suitable for use in the present invention include, but are not limited to, polymers of ethylene oxide and copolymers of ethylene oxide and propylene oxide such as ethylene oxide/propylene oxide block copolymers. Preferred steric stabilizers are butyl-omega-hydroxypoly(oxypropylene)block polymers with poly(oxyethylene) having an average molecular weight in a range of about 2,400 to 3,500 with alpha-butyl-omega-hydroxy-ethylene oxide-propylene oxide block copolymers such as TOXIMUL® 8320 (Stepan Chemical Co., Winder, Georgia), WITCONOL® NS 500 LQ (Witco) and TERGITOL® XD (Union Carbide, Danbury, Connecticut) being most preferred.

Suspending agents suitable for use in this invention include, but are not limited to, natural and synthetic clays and silicates, for example natural silicas such as diatomaceous earths; magnesium silicates such as talcs, magnesium aluminum silicates such as attapulgites and vermiculites; and aluminum silicates such as kaolinites, montmorillonites and micas. Preferred suspending agents are magnesium silicates, magnesium aluminum silicates and aluminum silicates with magnesium aluminum silicates such as VANGEL® ES (R.T. Vanderbilt), VEEGUM® (R.T. Vanderbilt), VEEGUM® T (R.T. Vanderbilt) and GELWHITE® (Southern Clay Products, Gonzales, Texas) being most preferred.

Thickening agents useful in this invention include, but are not limited to, natural thickening agents such as xanthan gum, carrageenan, pectin, gum arabic, guar rubber and the like; semisynthetic thickening agents such as the methylation products, carboxy-alkylation products and hydroxyalkylation products of cellulose or starch derivatives; and synthetic thickening agents such as polyacrylates, polymaleinates and polyvinylpyrrolidone with xanthan gums such as KELZAN® (Kelco, San Diego, California) and RHO-DOPOL® 23 (Rhone-Poulenc, Cranbury, New Jersey) being preferred thickening agents.

Antifreeze agents suitable for use in the present invention include glycols such as propylene glycol, ethylene glycol and the like with propylene glycol being preferred. Suitable antifoam agents include emulsions of silicone oils, emulsions of fatty alcohols and the like. Preservatives suitable for use in this invention include 1,2-benzisothiazolin-3-one, epichlorohydrin, phenylglycidyl ether, allylglycidyl ether, formaldehyde compositions and the like with 1,2-benzisothiazolin-3-one being preferred.

Suspension concentrate compositions of the present invention may conveniently be prepared by admixing arylpyrrole particles, a dispersing agent, a steric stabilizer, a suspending agent and an antifreeze agent with water to obtain a first mixture, holding the first mixture according to the process of this invention to obtain an aged mixture, milling the aged mixture to obtain a mixture comprising stabilized arylpyrrole particles, and admixing the mixture comprising stabilized arylpyrrole particles with a thickening agent and additional water to obtain the desired suspension concentrate composition.

The suspension concentrate compositions of this invention preferably have a pH of about pH 5 to pH 9 and more preferably about pH 6 to pH 8. To adjust the pH into the desired range, acids such as acetic acid, propionic acid, sulfuric acid, phosphoric acid, hydrochloric acid and the like may be used.

In order to facilitate a further understanding of the invention, the following examples are presented to illustrate more specific details thereof.

### EXAMPLE 1

### Preparation of stabilized chlorfenapyr particles

Propylene glycol (331 g), a 17% 1,2-benzisothiazolin-3-one solution (PROXEL® GXL, Zeneca) (6.35 g), a 30% silicone emulsion (AF 30 IND®, Harcros Chemical Co.)(29.9 g), an alpha-butyl-omega-hydroxyl-ethylene oxide/propylene oxide block copolymer (TOXIMUL® 8320, Stepan Chemical Co.)(132.5 g), a sodium sulfonate of a naphthalene formaldehyde condensate (MORWET® D425, Witco)(44 g), magnesium aluminum silicate (VANGEL® ES, R.T. Vanderbilt)(22.2 g), and chlorfenapyr (1,542 g, 90% real, 0% Polymorph I) are added sequentially with stirring to water (976 g). The resultant mixture is stirred until homogeneous and passed through a wet milling device to obtain a mixture identified as composition number 1 below comprising chlorfenapyr particles having a volume mean diameter of about 1.58 µm.

| Composition Number 1 | |
|---|---|
| Ingredient | wt/wt% |
| Chlorfenapyr | 50.00 |
| MORWET® D425 | 1.43 |
| TOXIMUL® 8320 | 4.30 |
| VANGEL® ES | 0.72 |
| Propylene glycol | 10.73 |
| AF 30 IND® | 0.97 |
| PROXEL® GXL | 0.21 |
| Water | 31.65 |

Individual samples of composition number 1 are stirred at 40 °C , 55 °C and 70 °C for 17 hours and passed through a wet milling device to obtain composition numbers 2, 3 and 4 comprising stabilized chlorfenapyr particles. Composition numbers 1-4 are then stored at room temperature for two months and the volume mean diameter of the chlorfenapyr particles in each composition is measured. The results are summarized in Table I.

As can be seen from the data in Table I, the volume mean diameter of the stabilized chlorfenapyr particles present in composition numbers 2, 3 and 4 increases significantly less than the volume mean diameter of the chlorfenapyr particles present in composition number 1.

**TABLE I**

| Stability of Chlorfenapyr Particles | | | |
|---|---|---|---|
| Comp. Number | Temperature (°C) Stirred at for 17 Hours | Initial Volume Mean Diameter of Chlorfenapyr Particles (µm) | Volume Mean Diameter of Chlorfenapyr Particles (µm) After Storage at Room Temperature for 2 Months |
| 1 | N/A | 1.58 | 4.47 |
| 2 | 40 | 1.42 | 1.41 |
| 3 | 55 | 1.49 | 1.41 |
| 4 | 70 | 1.50 | 2.72 |

### EXAMPLE 2

### Effect of initial particle size of chlorfenapyr particles

Using the same procedure as described in Example 1, but varying the particle size of the chlorfenapyr particles present in the compositions prior to holding at 55 °C, composition numbers 5-7 comprising stabilized chlorfenapyr particles are obtained. Those compositions and composition number 8, which is identical to composition number 1 from Example 1 except that the chlorfenapyr particles have a volume mean diameter of 1.44 µm, are stored at room temperature for three weeks. The volume mean diameter of the chlorfenapyr particles in each composition is then measured and the results are summarized in Table II.

As can be seen from the data in Table II, the volume mean diameter of the stabilized chlorfenapyr particles present in composition numbers 5-7 increases significantly less than the volume mean diameter of the chlorfenapyr particles present in composition number 8.

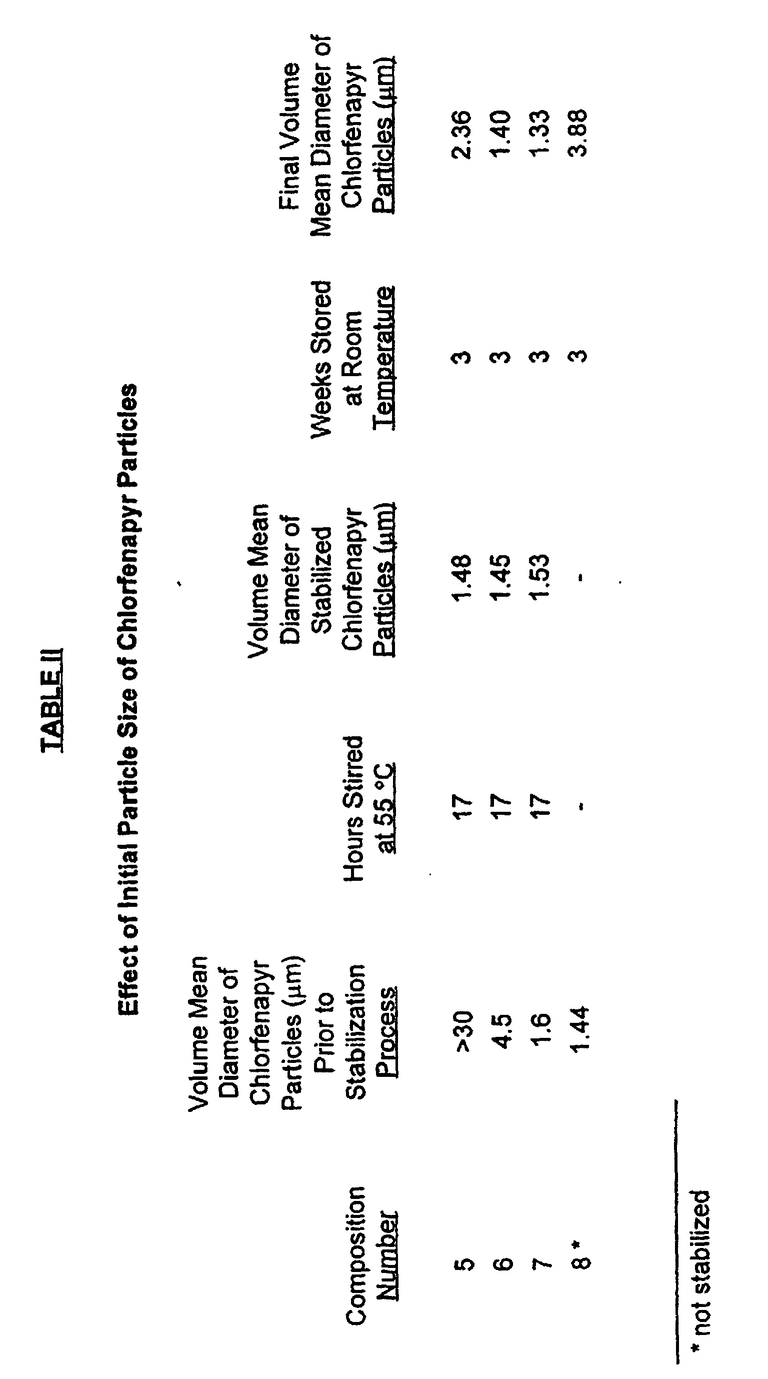

### EXAMPLE 3

### Effect of various holding periods

Using the same procedure as described in Example 1, but milling the chlorfenapyr particles present in the compositions to about 4 µm prior to holding at 55 °C for various periods of time, composition numbers 9-15 comprising stabilized chlorfenapyr particles are obtained. Composition numbers 9-15 and non-stabilized chlorfenapyr composition number 16, which is identical to composition number 1 in Example 1 except that the chlorfenapyr particles have a volume mean diameter of 1.41 µm, are stored at room temperature for three months. The volume mean diameter of the chlorfenapyr particles in each composition is then measured and the results are summarized in Table III.

As can be seen from the data in Table III, the volume mean diameter of the stabilized chlorfenapyr particles present in composition numbers 9-15 increases significantly less than the volume mean diameter of the chlorfenapyr particles present in composition number 16.

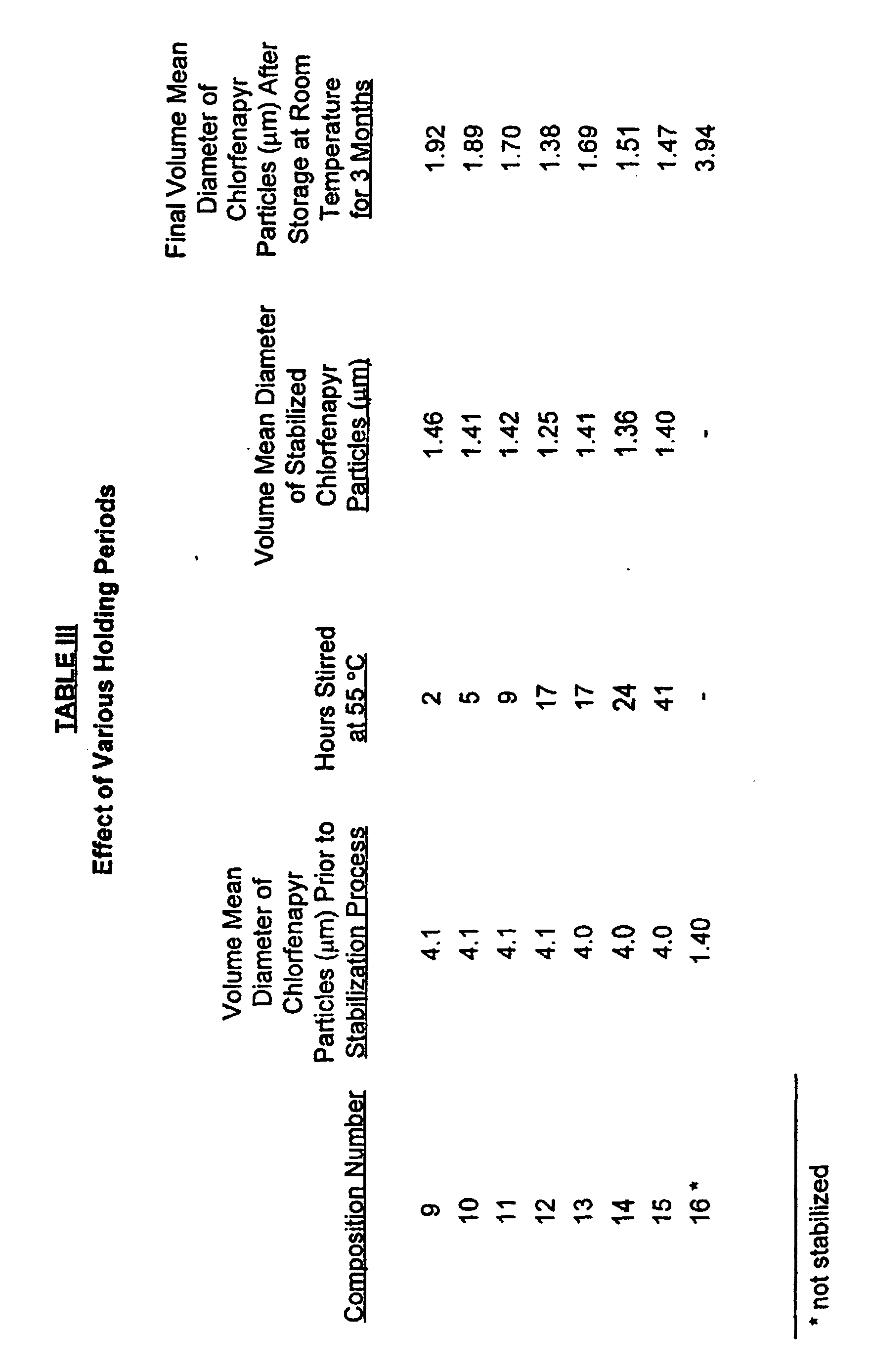

### EXAMPLE 4

### Effect of various chlorfenapyr polymorph ratios on storage stability of chlorfenapyr

Using the same procedure as described in Example 1, but using different batches of chlorfenapyr particles and holding at 55 °C for 17 hours, several compositions comprising stabilized chlorfenapyr particles are obtained and identified in Table IV. The compositions comprising the stabilized chlorfenapyr particles and the appropriate non-stabilized composition are stored at room temperature for various periods of time. The volume mean diameter of the chlorfenapyr particles in each composition is then measured and the results are summarized in Table IV.

As can be seen from the data in Table IV, chlorfenapyr particles present in stabilized compositions prepared using chlorfenapyr particles having less than about 80% Polymorph I are, in general, significantly more stable than chlorfenapyr particles present in the corresponding non-stabilized compositions.

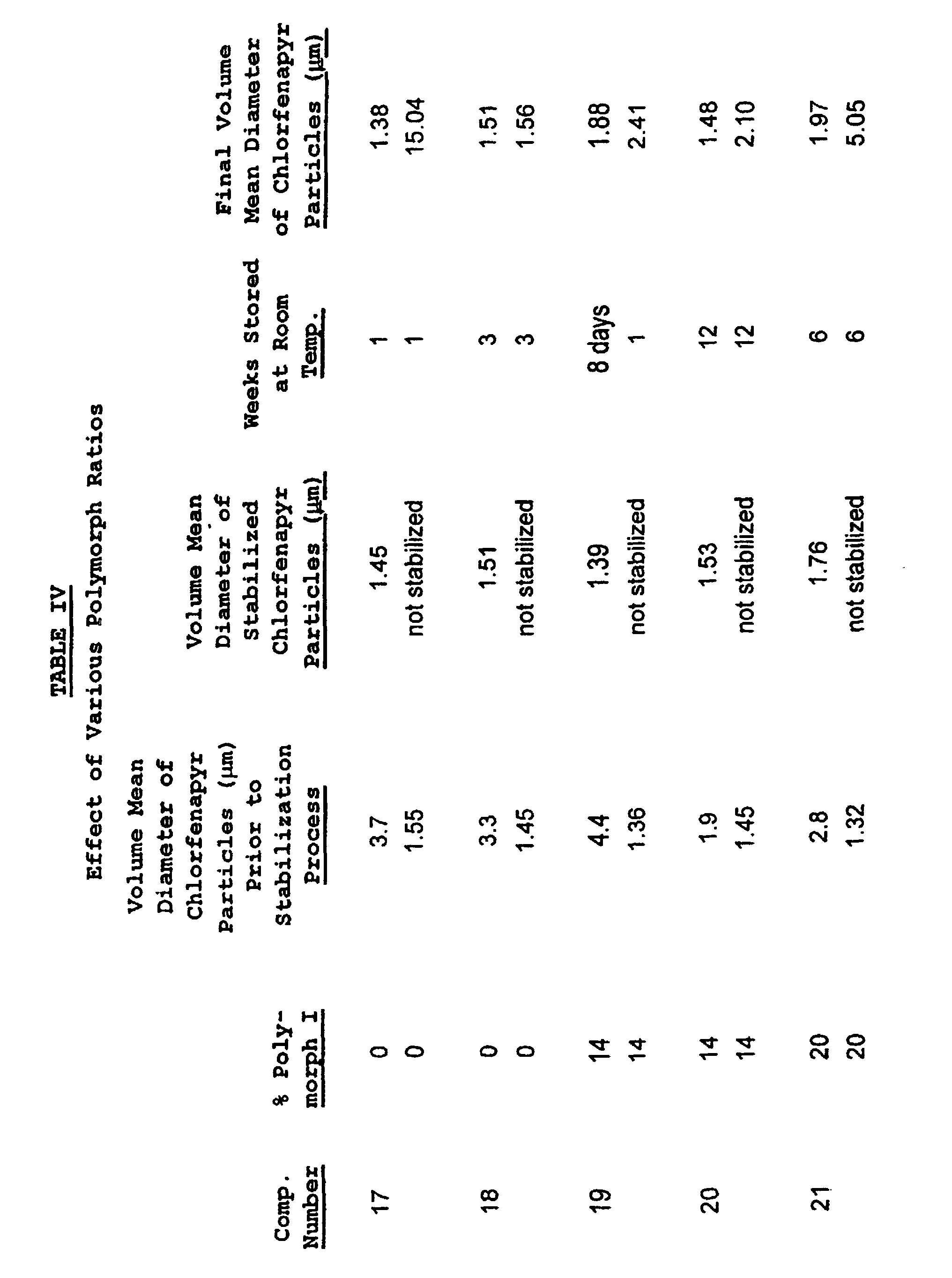

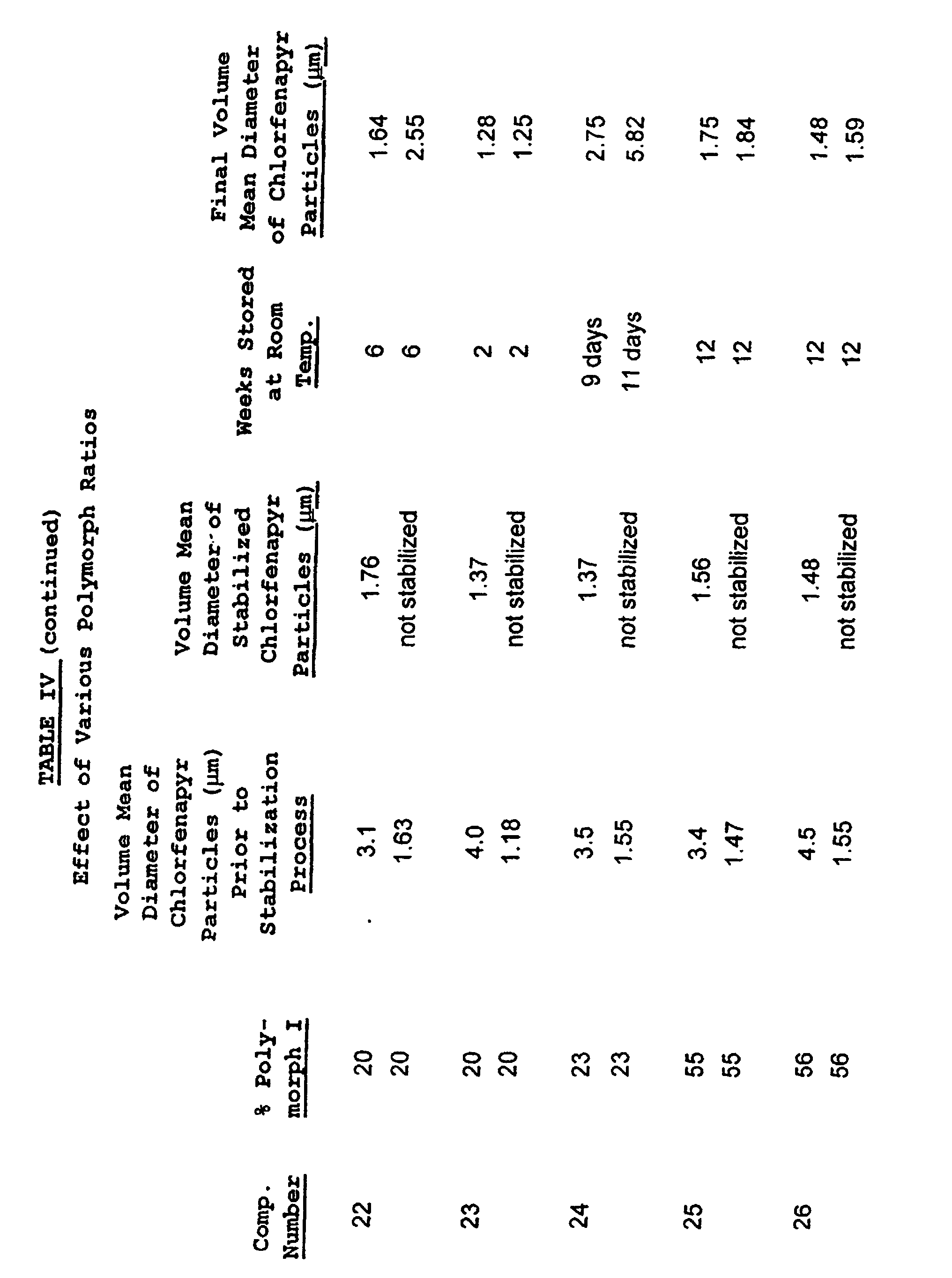

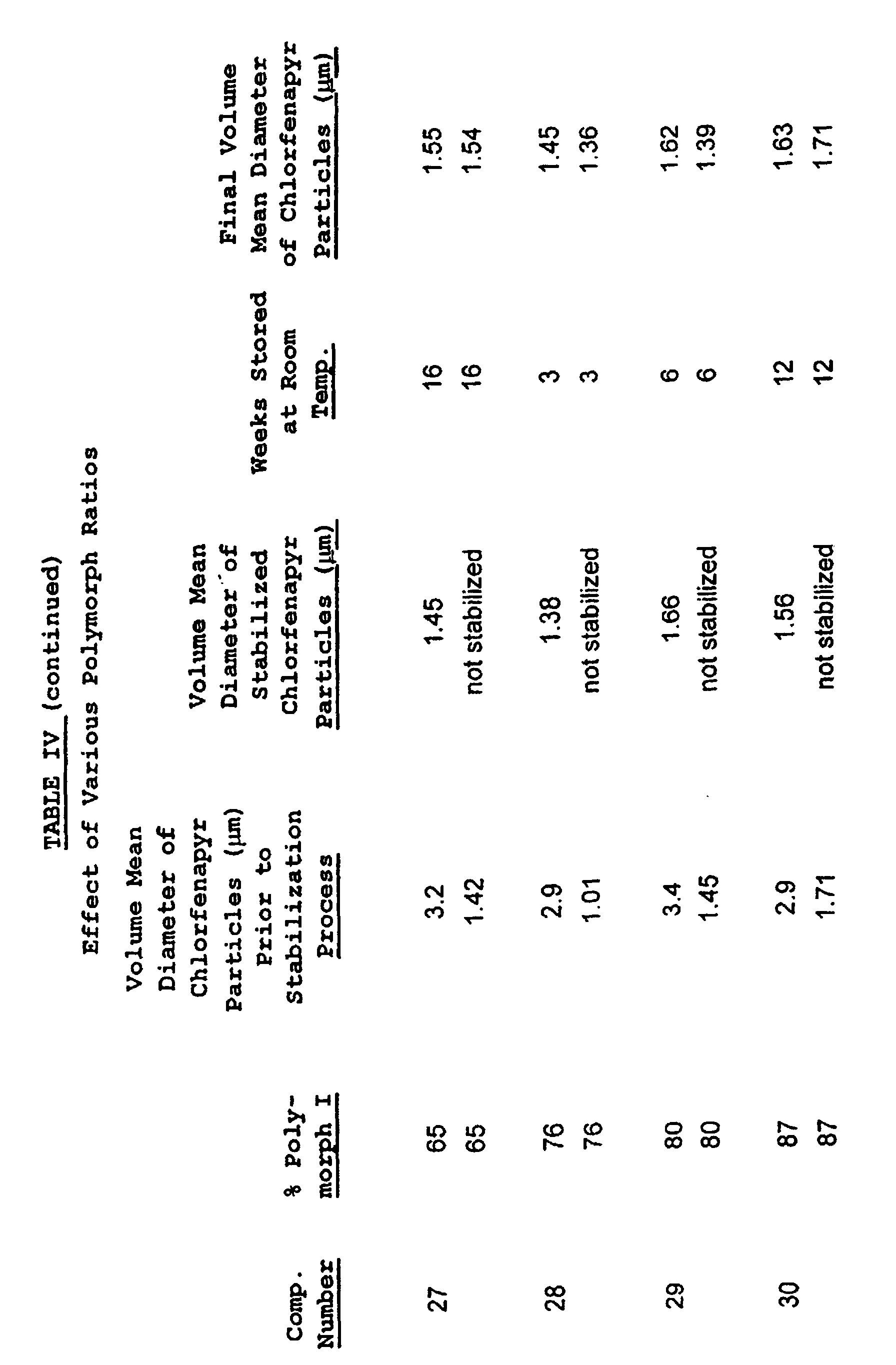

### EXAMPLE 5

### Effect of various polymorph ratios on storage stability of chlorfenapyr suspension concentrate compositions

Propylene glycol (730 g), a 17% 1,2-benzisothiazolin-3-one solution (PROXEL® GXL, Zeneca)(14.0 g), a 30% silicone emulsion (AF 30 IND®, Harcros Chemical Co.)(66.0 g), alpha-butyl-omega-hydroxyl-ethylene oxide/propylene oxide block copolymer (TOXIMUL® 8320, Stepan Chemical Co.)(292 g), sodium sulfonate of naphthalene formaldehyde condensate (MORWET® D425, Witco)(97.0 g), magnesium aluminum silicate (VANGEL® ES, R.T. Vanderbilt)(49.0 g) and chlorfenapyr (3,400 g, 90% real, 6.7:1 Polymorph I to Polymorph II ratio) are added sequentially with stirring to water (2,152 g). The resultant mixture is stirred until homogeneous and passed through a wet milling device to obtain a mill base wherein the chlorfenapyr particles have a volume mean diameter of about 1.5 µm. The mill base is charged into a vessel, agitated and adjusted to a pH of pH 6.5 to pH 7.2 with acetic acid (19.0 g). A 1% xanthan gum gel (1,459 g)(previously prepared from xanthan gum (15.0 g), a 17% 1,2-benzisothiazolin-3-one solution (PROXEL® GXL, Zeneca)(1.0 g) and water (1,443 g)) and water (1,453 g) are added to the pH adjusted mill base and mixing is continued to obtain the suspension concentrate composition identified below as composition number 31.

| Composition Number 31 | |
|---|---|
| Ingredient | wt/wt% |
| Chlorfenapyr¹ | 34.94 |
| MORWET® D425 | 1.00 |
| TOXIMUL® 8320 | 3.00 |
| VANGEL® ES | 0.50 |
| Propylene Glycol | 7.50 |
| AF 30 IND® | 0.68 |
| PROXEL® GXL | 0.15 |
| Xanthan Gum | 0.15 |
| Acetic Acid | 0.20 |
| Water | 51.88 |

| | |
|---|---|
| ¹Polymorph I to Polymorph II ratio is 6.7:1 | |

Using the same procedure, but varying the Polymorph I to Polymorph II ratio, the suspension concentrate compositions identified as composition numbers 32-38 in Table V are obtained. Samples of the suspension concentrate compositions are stored at room temperature for various periods of time. The volume mean diameter of the chlorfenapyr particles in each sample is then measured and the results are summarized in Table V.

As can be seen from the data in Table V, chlorfenapyr particles comprising a Polymorph I to Polymorph II ratio of greater than about 1:4 (composition numbers 31-35) are significantly more stable than chlorfenapyr particles comprising a Polymorph I to Polymorph II ratio of 1:4 to 0:1 (composition numbers 36-38).

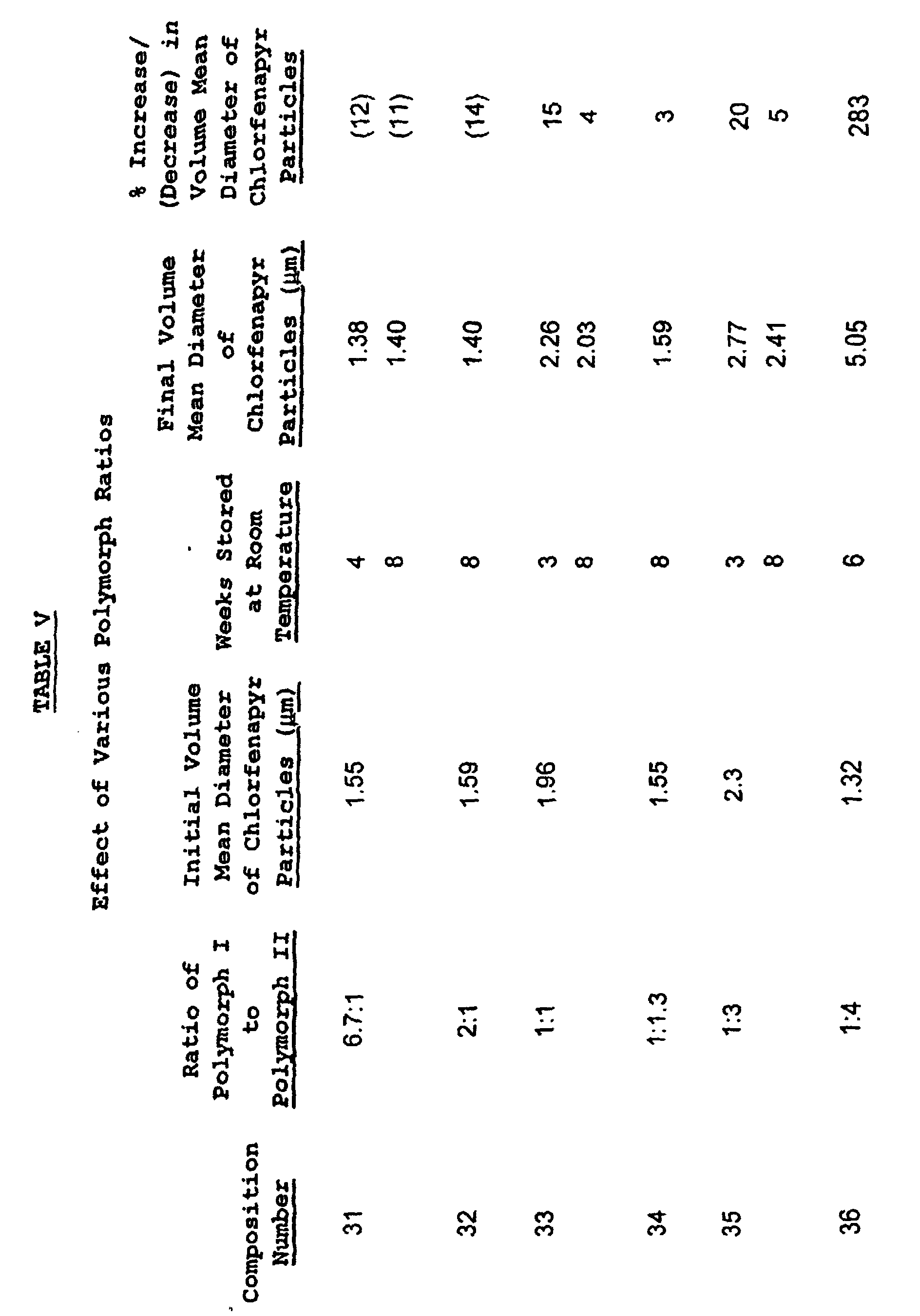

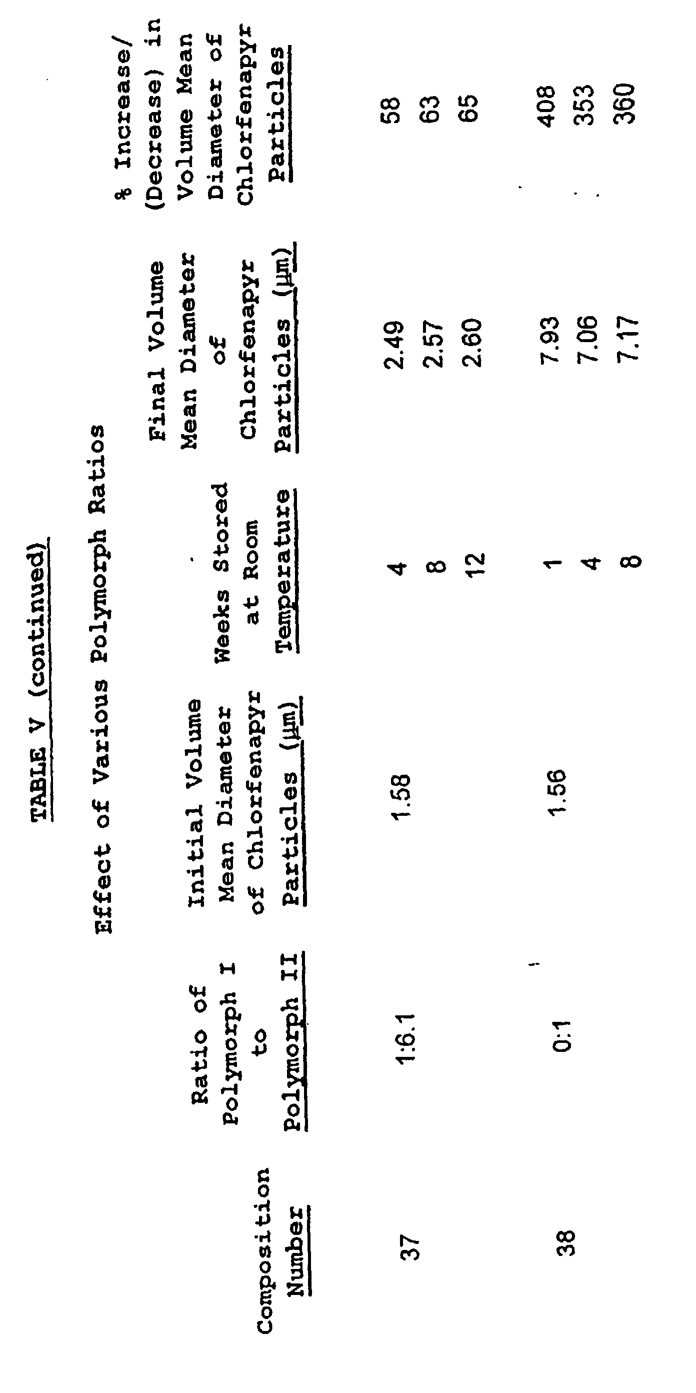

## Claims

1. A process for the preparation of arylpyrrole particles which process comprises providing a first mixture comprising arylpyrrole particles, a dispersing agent and water, **characterized in that** the first mixture is held in a temperature range of about 25°C to 80°C to obtain an aged mixture, and the aged mixture is milled,
wherein the arylpyrrole has the structural formula 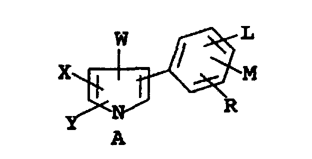 wherein
X is H, F, Cl, Br, I, C₁-C₄-haloalkyl or S(O)ₘ(C₁-C₄-haloalkyl);
Y is F, Cl, Br, I, C₁-C₄-haloalkyl or CN;
W is CN or NO₂;
A is C₁-C₄-alkyl unsubstituted or substituted with one to three halogen atoms, one cyano, one hydroxy, one C₁-C₄-alkoxy, one C₁-C₄-alkylthio, one phenyl, unsubstituted or substituted with C₁-C₃-alkyl, C₁-C₃-alkoxy, or one to three halogen atoms, one phenoxy, unsubstituted or substituted with one to three halogen atoms, or one benzyloxy, unsubstituted or substituted with one halogen atom, C₁-C₄-carbalkoxymethyl, C₃-C₄-alkenyl, unsubstituted or substituted with one to three halogen atoms, cyano, C₃-C₄-alkynyl, unsubstituted or substituted with one halogen atom, di-(C₁-C₄-alkyl)aminocarbonyl, or benzoyl, unsubstituted or substituted with one to three halogen atoms or one to three C₁-C₄-alkyl groups;
L is H, F, Cl or Br;
M,R are each independently H, C₁-C₃-alkyl, C₁-C₃-alkoxy, C₁-C₃-alkylthio, C₁-C₃-alkylsulfinyl, C₁-C₃-alkylsulfonyl, cyano, F, Cl, Br, I, nitro, C₁-C₃-haloalkyl, R₁CF₂Z, R₂CO or NR₃R₄, or
when M and R are adjacent positions and taken with the carbon atoms to which they are attached they may form a ring in which MR represents the structure -OCH₂O-, -OCF₂O-, -OCR₆R₇CR₈R₉O-, -OCH₂CH₂-, -OCH₂CH₂CH₂- or -CH=CH-CH=CH-;
Z is S(O)ₙ or O;
R₁ is H, F, CHF₂, CHFCl or CF₃;
R₂ is C₁-C₃-alkyl, C₁-C₃-alkoxy or NR₃R₄;
R₃ is H or C₁-C₃-alkyl;
R₄ is H, C₁-C₃-alkyl or C₅CO;
R₅ is H or C₁-C₃-alkyl;
R₆, R₇, R₈ and R₉ are each independently hydrogen, halogen or C₁-C₃-alkyl; and
m and n are each independently an integer of 0, 1 or 2.

2. The process according to claim 1 wherein the arylpyrrole has the structural formula

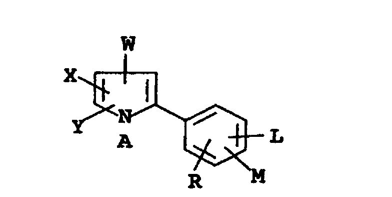

3. The process according to claims 1 or 2 wherein
X and Y are each independently Cl, Br or CF₃;
W is CN;
A is C₁-C₄-alkoxymethyl;
L is H or F;
M is H, F, Cl or Br; and
R is F, Cl, Br, CF₃ or OCF₃.

4. The process according to claims 1 to 3 wherein the arylpyrrole is chlorfenapyr.

5. The process according to claims 1 to 4 wherein the arylpyrrole particles of the first mixture have a volume mean diameter of less than 100 µm.

6. The process according to claims 1 to 5 wherein the first mixture is held in the temperature range for 1 hour to 72 hours.

7. The process according to claims 1 to 6 wherein the temperature range is 40°C to 60°C.

8. The process according to claims 4 to 7 wherein the clorfenapyr particles in the first mixture comprise less than 80 percent of Polymorph I.

9. Stable arylpyrrole particles obtainable by the process of any of claims 1 to 8.

10. A stable arylpyrrole particle according to claim 9 comprising an arylpyrrole which can exist as at least two different polymorphs, at least one of which is particle size stable during storage as a suspension at room temperature, wherein the ratio of stable polymorph to unstable polymorph in said particle is greater than 1 : 4, said arylpyrrole being represented by the formula as defined in claims 1 to 4.

11. A particle according to claim 10 wherein said ratio is 1 : 1 to 1 : 0.

12. A composition comprising an arylpyrrole particle as claimed in claims 9 to 11.

13. A suspension concentrate composition which comprises about 10% to 50% by weight of stable arylpyrrole particles obtainable by the process of claims 1 to 8, about 0,1% to 2% by weight of a dispersing agent, about 0,5% to 5% by weight of a steric stabilizer, about 0,1% to 1% by weight of a suspending agent, about 0,01% to 0,5% by weight of a thickening agent, about 5% to 15% by weight of an antifreeze agent, up to about 1% by weight of an antifoam agent, up to about 0,5% by weight of a preservative and water.

14. The composition according to claim 13 wherein the stable arylpyrrole particles have a volume mean diameter of about 0,5 µm to 10 µm.

15. The composition according to claim 13 or 14 wherein the dispersing agent is a salt of the condensation products of formaldehyde with the sulfonation products of polycyclic aromatic compounds; the steric stabilizer is an ethylene oxide/propylene oxide block copolymer; the suspending agent is selected from the group consisting of a magnesium aluminium silicate, a magnesium silicate and an aluminium silicate; the antifreeze agent is a glycol; and the thickening agent is selected from the group consisting of xanthan gum, carrageenan, pectin, gum arabic and guar rubber.

16. The composition according to claims 13 to 15 wherein the dispersing agent is the sodium sulfonate of naphtalene formaldehyde condensates, the steric stabilizer is an alpha-butyl-omega-hydroxy-ethylene oxide-propylene oxide block copolymer, the suspending agent is a magnesium aluminium silicate, the anitfreeze agent is propylene glycol, and the thickening agent is xanthan gum.

## Patentansprüche

1. Verfahren zur Herstellung von Arylpyrrolpartikeln, bei dem man eine erste Mischung enthaltend Arylpyrrolpartikel, ein Dispergiermittel und Wasser bereitstellt, **dadurch gekennzeichnet, daß** die erste Mischung in einem Temperaturbereich von ungefähr 25°C bis 80°C gehalten wird, wodurch man eine gereifte Mischung erhält, und die gereifte Mischung gemahlen wird,
wobei das Arylpyrrol die Strukturformel 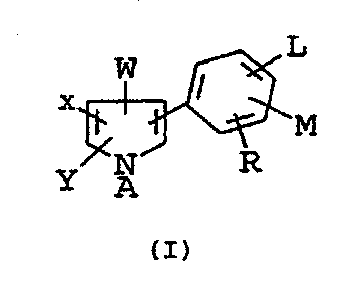 aufweist,
in der
X H, F, Cl, Br, I, C₁-C₄-Halogenalkyl oder S(O)ₘ(C₁-C₄-Halogenalkyl) bedeutet,
Y F, Cl, Br, I, C₁-C₄-Halogenalkyl oder CN bedeutet;
W CN oder NO₂ bedeutet,
A C₁-C₄-Alkyl, unsubstituiert oder substituiert durch ein bis drei Halogenatome, ein Cyano, ein Hydroxy, ein C₁-C₄-Alkoxy, ein C₁-C₄-Alkylthio, ein Phenyl, unsubstituiert oder substituiert durch C₁-C₃-Alkyl, C₁-C₃-Alkoxy oder ein bis drei Halogenatome, ein Phenoxy, unsubstituiert oder substituiert durch ein bis drei Halogenatome, oder ein Benzyloxy, unsubstituiert oder substituiert durch ein Halogenatom, C₁-C₄-Carbalkoxymethyl, C₃-C₄-Alkenyl, unsubstituiert oder substituiert durch ein bis drei Halogenatome, Cyan, C₃-C₄-Alkinyl, unsubstituiert oder substituiert durch ein Halogenatom, Di(C₁-C₄-alkyl)aminocarbonyl, oder Benzoyl, unsubstituiert oder substituiert durch ein bis drei Halogenatome oder ein bis drei C₁-C₄-Alkylgruppen, bedeutet,
L H, F, Cl oder Br bedeutet,
M, R jeweils unabhängig H, C₁-C₃-Alkyl, C₁-C₃-Alkoxy, C₁-C₃-Alkylthio, C₁-C₃-Alkylsulfinyl, C₁-C₃-Alkylsulfonyl, Cyan, F, Cl, Br, I, Nitro, C₁-C₃-Halogenalkyl, R₁CF₂Z, R₂CO oder NR₃R₄ bedeutet oder,
wenn M und R benachbarte Positionen einnehmen, sie unter Einbeziehung des Kohlenstoffatoms, an das sie gebunden sind, einen Ring bilden können, in dem MR die Struktur -OCH₂O-, -OCF₂O-, -OCR₆R₇CR₈R₉O-, -OCH₂CH₂-, -OCH₂CH₂CH₂- oder -CH=CH-CH=CH- bedeutet,
Z S(O)ₙ oder O bedeutet,
R₁ H, F, CHF₂, CHFCl oder CF₃ bedeutet,
R₂ C₁-C₃-Alkyl, C₁-C₃-Alkoxy oder NR₃R₃ bedeutet,
R₃ H oder C₁-C₃-Alkyl bedeutet,
R₄ H, C₁-C₃-Alkyl oder C₅CO bedeutet,
R₅ H oder C₁-C₃-Alkyl bedeutet,
R₆, R₇, R₈ und R₉ jeweils unabhängig Wasserstoff, Halogen oder C₁-C₃-Alkyl bedeuten und
m und n jeweils unabhängig eine ganze Zahl 0, 1 oder 2 bedeuten.

2. Verfahren nach Anspruch 1, wobei das Arylpyrrol die Strukturformel 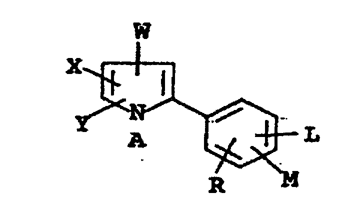 aufweist.

3. Verfahren nach Anspruch 1 oder 2, wobei
X und Y jeweils unabhängig Cl, Br oder CF₃ bedeuten,
W CN bedeutet,
A C₁-C₄-Alkoxymethyl bedeutet,
L H oder F bedeutet,
M H, F, Cl oder Br bedeutet und
R F, Cl, Br, CF₃ oder OCF₃ bedeutet.

4. Verfahren nach den Ansprüchen 1 bis 3, wobei es sich bei dem Arylpyrrol um Chlorfenapyr handelt.

5. Verfahren nach den Ansprüchen 1 bis 4, wobei die Arylpyrrolpartikel der ersten Mischung einen mittleren Volumendurchmesser von unter 100 µm aufweisen.

6. Verfahren nach den Ansprüchen 1 bis 5, wobei die erste Mischung 1 Stunde bis 72 Stunden in dem Temperaturbereich gehalten wird.

7. Verfahren nach den Ansprüchen 1 bis 6, wobei der Temperaturbereich von 40°C bis 60°C reicht.

8. Verfahren nach den Ansprüchen 4 bis 7, wobei die Chlorfenapyrpartikel in der ersten Mischung unter 80 Prozent Polymorph I enthalten.

9. Stabile Arylpyrrolpartikel, erhältlich nach dem Verfahren nach einem der Ansprüche 1 bis 8.

10. Stabiles Arylpyrrolpartikel nach Anspruch 9, enthaltend ein Arylpyrrol, das in Form von mindestens zwei unterschiedlichen Polymorphen vorliegen kann, wobei mindestens ein Polymorph während der Lagerung als Suspension bei Raumtemperatur eine stabile Partikelgröße aufweist, wobei das Verhältnis des stabilen Polymorphs zu dem instabilen Polymorph in dem Partikel größer als 1 : 4 ist, wobei das Arylpyrrol durch die in den Ansprüchen 1 bis 4 definierte Formel beschrieben wird.

11. Partikel nach Anspruch 10, wobei das Verhältnis 1 : 1 bis 1 : 0 beträgt.

12. Zusammensetzung enthaltend ein Arylpyrrolpartikel nach den Ansprüchen 9 bis 11.

13. Suspensionskonzentratzusammensetzung, die ungefähr 10 Gew.-% bis 50 Gew.-% stabile Arylpyrrolpartikel erhältlich nach dem Verfahren nach Ansprüchen 1 bis 8, ungefähr 0,1 Gew.-% bis 2 Gew.-% eines Dispergiermittels, ungefähr 0,5 Gew.-% bis 5 Gew.-% eines sterischen Stabilisators, ungefähr 0,1 Gew.-% bis 1 Gew.-% eines Suspendiermittels, ungefähr 0,01 Gew.-% bis 0,5 Gew.-% eines Verdickungsmittels, ungefähr 5 Gew.-% bis 15 Gew.-% eines Gefrierschutzmittels, bis zu ungefähr 1 Gew.-% eines Antischaummittels, bis zu ungefähr 0,5 Gew.-% eines Konservierungsmittels sowie Wasser enthält.

14. Zusammensetzung nach Anspruch 13, wobei die stabilen Arylpyrrolpartikel einen mittleren Volumendurchmesser von ungefähr 0,5 µm bis 10 µm aufweisen.

15. Zusammensetzung nach Anspruch 13 oder 14, wobei das Dispergiermittel ein Salz des Kondensationsprodukts von Formaldehyd mit den Sulfonierungsprodukten polycyclischer aromatischer Verbindungen ist, der sterische Stabilisator ein Ethylenoxid/Propylenoxid-Blockcopolymer ist, das Suspendiermittel aus der Gruppe bestehend aus einem Magnesiumaluminiumsilikat, einem Magnesiumsilikat und einem Aluminiumsilikat gewählt ist, das Gefrierschutzmittel ein Glykol ist und das Verdickungsmittel aus der Gruppe Xanthangummi, Carrageenan, Pektin, Gummi arabicum sowie Guargummi ausgewählt ist.

16. Zusammensetzung nach den Ansprüchen 13 bis 15, wobei das Dispergiermittel das Natriumsulfonat von Naphthalinformaldehydkondensaten ist, der sterische Stabilisator ein alpha-Butyl-omegahydroxyethylenoxid/Propylenoxid-Blockcopolymer ist, das Suspendiermittel ein Magnesiumaluminiumsilikat ist, das Gefrierschutzmittel Propylenglykol ist und das Verdickungsmittel Xanthangummi ist.

## Revendications

1. Procédé de préparation de particules d'arylpyrrole lequel procédé comprend la fourniture d'un premier mélange comprenant des particules d'arylpyrrole, un agent dispersant et de l'eau, **caractérisé en ce que**, le premier mélange est maintenu dans une plage de températures d'environ 25°C à 80°C afin d'obtenir un mélange vieilli, et le mélange vieilli est broyé,
dans lequel l'arylpyrrole répond à la formule développée 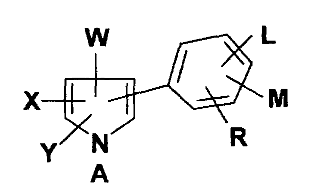 dans laquelle
X représente un atome de H, de F, de Cl, de Br, de I, un groupe halogénoalkyle en C₁ à C₄, où S (O)ₘ(halogénoalkyle en C₁ à C₄);
Y représente un atome de F, de Cl, de Br, de I, un groupe halogénoalkyle en C₁ à C₄, ou CN;
W représente un groupe CN ou NO₂;
A représente un groupe alkyle en C₁ à C₄ non substitué ou substitué par un à trois atomes d'halogène, un groupe cyano, un groupe hydroxy, un groupe alcoxy en C₁ à C₄, un groupe alkylthio en C₁ à C₄, un groupe phényle, non substitué ou substitué par un groupe alkyle en C₁ à C₃, un groupe alcoxy en C₁ à C₃, ou un à trois atomes d'halogène, un groupe phénoxy, non substitué ou substitué par un à trois atomes d'halogène, ou un groupe benzyloxy, non substitué ou substitué par un atome d'halogène, un groupe (carbalcoxy en C₁ à C₄)-méthyle, un groupe alcényle en C₃ à C₄, non substitué ou substitué par un à trois atomes d'halogène, un groupe cyano, un groupe alcynyle en C₃ à C₄, non substitué ou substitué par un atome d'halogène, un groupe di-(alkyle en C₁ à C₄)aminocarbonyle, ou un groupe benzoyle, non substitué ou substitué par un à trois atomes d'halogène ou un à trois groupes alkyle en C₁ à C₄;
L représente un atome de H, de F, de Cl, ou de Br;
M,R représentent chacun indépendamment un atome de H, un groupe alkyle en C₁ à C₃, alcoxy en C₁ à C₃, alkylthio en C₁ à C₃, alkylsulfinyle en C₁ à C₃, alkysulfonyle en C₁ à C₃, cyano, un atome de F, de Cl, de Br, de I, un groupe nitro, halogénoalkyle en C₁ à C₃, R₁CF₂Z, R₂CO ou NR₃R₄,
ou
lorsque M et R sont dans des positions adjacentes et pris avec les atomes de carbone auxquels ils sont liés, ils peuvent former un cycle dans lequel MR représente la structure -OCH₂O-, -OCF₂O-, -OCR₆R₇CR₈R₉O-, -OCH₂CH₂-, -OCH₂CH₂CH₂- ou -CH=CH-CH=CH-;
Z représente S(O)ₙ, ou un atome de O;
R₁ représente un atome de H, de F, un groupe CHF₂, CHFCI ou CF₃;
R₂ représente un groupe alkyle en C₁ à C₃, alcoxy en C₁ à C₃, ou NR₃R₄;
R₃ représente un atome de H ou un groupe alkyle en C₁ à C₃;
R₄ représente un atome de H, un groupe alkyle en C₁ à C₃, ou C₅CO;
R₅ représente un atome de H ou un groupe alkyle en C₁ à C₃;
R₆, R₇, R₈ et R₉ représentent chacun indépendamment un atome d'hydrogène, d'halogène ou un groupe alkyle en C₁ à C₃; et
m et n valent chacun indépendamment un nombre entier 0, 1 ou 2.

2. Procédé selon la revendication 1, dans lequel l'arylpyrrole répond à la formule développée

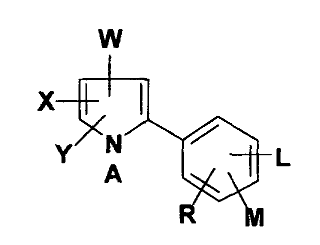

3. Procédé selon les revendications 1 ou 2, dans lequel
X et Y représentent chacun indépendamment un atome de Cl, de Br ou un groupe CF₃;
W représente un groupe CN;
A représente un groupe (alcoxy en C₁ à C₄)-méthyle;
L représente un atome de H ou de F;
M représente un atome de H, de F, de Cl, ou de Br; et
R représente un atome de F, de Cl, de Br, un groupe CF₃ ou OCF₃.

4. Procédé selon les revendications 1 à 3, dans lequel l'arylpyrrole est le chlorfénapyr.

5. Procédé selon les revendications 1 à 4, dans lequel les particules d'arylpyrrole du premier mélange présentent un diamètre moyen en volume inférieur à 100 µm.

6. Procédé selon les revendications 1 à 5, dans lequel le premier mélange est maintenu dans la plage de températures pendant 1 heure à 72 heures.

7. Procédé selon les revendications 1 à 6, dans lequel la plage de température est de 40°C à 60°C.

8. Procédé selon les revendications 4 à 7, dans lequel les particules de chlorfénapyr dans le premier mélange comprennent moins de 80% de la forme polymorphe I.

9. Particules d'arylpyrrole stables que l'on peut obtenir à l'aide du procédé selon l'une quelconque des revendications 1 à 8.

10. Particule d'arylpyrrole stable selon la revendication 9, comprenant un arylpyrrole qui peut exister sous la forme d'au moins deux formes polymorphes différentes, dont au moins l'une est stable en taille de particule pendant l'entreposage sous la forme d'une suspension à la température ambiante, dans laquelle le rapport de la forme polymorphe stable à la forme polymorphe instable dans ladite particule est supérieur à 1:4, ledit arylpyrrole étant représenté par la formule selon les revendications 1 à 4.

11. Particule selon la revendication 10, dans laquelle ledit rapport est de 1:1 à 1:0.

12. Composition comprenant une particule d'arylpyrrole selon les revendications 9 à 11.

13. Composition de concentré de suspension qui comprend environ 10 à 50% en poids de particules d'arylpyrrole stables que l'on peut obtenir à l'aide du procédé selon les revendications 1 à 8, environ 0,1% à 2% en poids d'un agent dispersant, environ 0,5% à 5% en poids d'un stabilisant stérique, environ 0,1% à 1% en poids d'un agent de suspension, environ 0,01% à 0,5% en poids d'un épaississant, environ 5% à 15% en poids d'un agent antigel, jusqu'à environ 1% en poids d'un agent anti-mousse, jusqu'à environ 0,5% en poids d'un conservateur, et de l'eau.

14. Composition selon la revendication 13, dans laquelle les particules d'arylpyrrole stables possèdent un diamètre moyen en volume d'environ 0,5 µm à 10 µm.

15. Composition selon la revendication 13 ou 14, dans laquelle l'agent dispersant est un sel des produits de condensation du formaldéhyde avec les produits de sulfonation de composés aromatiques polycycliques; le stabilisant stérique est un copolymère séquencé oxyde d'éthylène/oxyde de propylène; l'agent de suspension est choisi dans le groupe formé par un aluminosilicate de magnésium, un silicate de magnésium et un silicate d'aluminium; l'agent antigel est un glycol; et l'épaississant est choisi dans le groupe formé par la gomme de xanthane, la carragénine, la pectine, la gomme arabique, et le caoutchouc guar.

16. Composition selon les revendications 13 à 15, dans laquelle l'agent dispersant est le sulfonate sodique de condensats napthalène/formaldéhyde, le stabilisant stérique est un copolymère séquencé alpha-butyle/oméga-hydroxy/oxyde d'éthylène/oxyde de propylène, l'agent de suspension est un aluminosilicate de magnésium, l'agent antigel est le propylèneglycol, et l'épaississant est la gomme de xanthane.
